# EUROPEAN PATENT SPECIFICATION

(11) **EP 2 527 799 B1**
(45) Date of publication and mention of the grant of the patent: **18.03.2020**
(21) Application number: 11004308.0
(22) Date of filing: 25.05.2011
(51) Int. Cl.: G01F 5/00, G01F 15/00, G01F 15/14

(54) **Flow sensor arrangement**
Durchflusssensoranordnung
Agencement de capteur de débit

(43) Date of publication of application: 28.11.2012
(73) Proprietor: Sensirion AG, 8712 Stäfa (CH)
(72) Inventor: Mayer, Felix, 8712 Stäfa (CH); Bächlin, Marc, 8610 Uster (CH); Hornung, Mark, 8712 Stäfa (CH); Brühwiler, Markus, 8044 Zürich (CH); Monnin, Eric, 8713 Uerikon (CH)
(74) Representative: Toleti, Martin

(56) References cited:
- WO-A2-00/45163
- US-A- 5 099 881

## Description

### Technical Field

The invention relates to a flow sensor arrangement.

### Background Art

Flow sensor arrangements may be used for measuring flows of a fluid such as a liquid or a gas. In many applications, a flow sensor used for measuring a flow is not arranged in a main path for the fluid but in a bypass bypassing the main path. In operation, a small portion of the fluid is branched off from the main path into the bypass where the flow of such portion is measured. Based on the known design of the main path / bypass structure, a flow in the main path can be deduced from the measured flow in the bypass.

Such flow sensor arrangement is beneficial in that flows are measured at lower scale which may result in a better resolution of the measurement. In addition, flow conditions in the bypass may be preferred over flow conditions in the main path and/or may be better controllable. Moreover, in some applications, an arrangement of a flow sensor in the main path may be difficult or undesired.

However, an introduction of such bypass may cause turbulences in the fluid, especially in an area the bypass branches off from the main path. As a result, the fluid portion in the bypass may also be affected by turbulences which may impact the measurement in the bypass.

In WO 00/45163, a microsensor housing is disclosed having a structure with at least one inlet at one end and a thermal property sensor at the other end. Situ-ated between the inlet and the sensor is a convection shield. Sampled fluid is taken in the inlet from a channel carrying the fluid to be sampled. The convection flow lines of the fluid are barred by the convection shield. The fluid is diffused into a cavity between the shield and sensor. The sensor detects a thermal property of the diffused fluid. One preferred shield has holes about its perimeter with a solid center part of the shield covering at a distance the sensor. The channel carrying the fluid may have screens to reduce turbulence noise and to aid in fluid transport to and from the sensor housing.

According to US 5,099,881, a flow dividing structure for a mass flow controller includes a base having a main passage which includes an upsream circular passage, a downstream circular passage, and a tapering circular passage which connects the upstream and downstream circular passages. A plug inserted in the main passage includes a first cylindrical portion, a second cylindrical portion and a tapering frustoconical portion. A first annular passage is defined between the first cylindrical portion and the inner circumferential surface of the upstream circular passage. A second annular passage is defined between the second cylindrical portion and the inner circumferential surface of the downstream circular passage. A tapering annular passage is defined between the tapering frustoconical portion and the inner circumferential surface of the tapering circular passage. A flow measuring passage bypasses the tapering circular passage and connects the upstream circular passage with the downstream circular passage.

### Disclosure of the Invention

The problem to be solved by the present invention is therefore to provide a flow sensor arrangement which allows branching off a portion of fluid from a main path for measuring purposes and at the same time is less prone to causing turbulence in the portion of fluid branched off.

This problem is solved by a flow sensor arrangement according to independent claim 1. The flow sensor arrangement comprises a main path for a fluid to flow through and a bypass for bypassing the main path. An inlet or an outlet of the bypass comprises at least one opening arranged in a wall of the main path. A flow sensor is arranged for measuring a flow in the bypass. In preferred embodiments, a flow of the fluid in the main path is determined based on the measured flow in the bypass.

In the main path, a guide is arranged at an inner wall of the main path in order to smooth the flow in the main path at the location where the inlet of the bypass or its outlet respectively meets the main path. The guide is aligned in flow direction. This is achieved by arranging at least a portion of the guide prior to the opening into the bypass. It was found that by introducing such guide into the main path, turbulences in the fluid are reduced for the reason that walls of the guide may evoke additional friction forces acting on the fluid. This contributes to converting the turbulence flow into a more laminar flow. Therefore, a first section of the main path - which is followed by a second section in flow direction - comprises at least a portion of the guide wherein the opening is arranged in the second section. This may result in the flow being smoothed already when the opening into the bypass is reached. Such guide is arranged with respect to the inlet of the bypass, or with respect to the outlet of the bypass, or in another embodiment a guide is arranged with respect to the inlet of the bypass, and another guide is arranged with respect to the outlet of the bypass. In the latter scenario, the guide arranged at the inlet of the bypass may be extended up to the outlet of the bypass such that the guide and the other guide may be implemented as a common guide.

While arranging a guide at the inlet of the bypass may cause the flow in the main path being smoothed already when reaching the opening of the inlet and as a result may cause a more smooth flow of fluid into the bypass, arranging a guide at the outlet of the bypass may cause the flow in the main path being smoothed at the outlet and allowing for a more constant absorption of fluid from the bypass which in turn enhances the a more smooth flow of the fluid in the bypass, too.

The second section contains another portion of the guide, too, as does a third section following the second section in flow direction. The guide spans a given length of the main path in flow direction and passes the one or more openings being arranged next to the guide.

In an embodiment of the present invention, a flow resistance may be arranged in the main path for causing a pressure drop in the fluid and as a result diverting a portion of the fluid into the bypass. Such flow resistance, which has the shape of a grid, is arranged in the third section.

In another embodiment (currently not claimed), no such separate flow resistance may be provided. Instead, multiple guides may be arranged around the perimeter of the main path. In case of the main path showing a circular cross section, guides may be arranged, for example, as protruding members extending from an inner wall defining the main path, wherein at least one guide is arranged per quadrant of the cross section. In a preferred embodiment, between two and eight guides are arranged per quadrant. In another preferred embodiment, at least two guides of the multiple guides may show different maximum height. By means of this embodiment, a flow resistance in the center of the main path is smaller than at the periphery of the main path such that the fluid will be concentrated rather into its center than into its periphery. This in turn supports a more laminar and less turbulent flow at the inlet or outlet respectively. The same effect may be achieved by providing one or more guides with a varying width, i.e. each guide being wider at its bottom close to the inner wall than at its top reaching into the main channel in a scenario where the guides are protruding from the inner wall of the main path. In the above embodiments, the guides may not only serve for preventing from turbulences but may also serve as a flow resistance.

In order to provide a sufficient amount of friction the height of a or each guide may preferably be at least equal to or more than a diameter of a single opening belonging to an inlet of the bypass or its outlet respectively. In a different embodiment, the height of a or each guide may preferably be at least 30% of the diameter of the main path. An upmost height of a or each guide may preferably be less than 50% of the diameter of the main path.

In another embodiment, the inlet of the bypass or its outlet respectively comprises multiple openings leading into individual channels. Such channels may later on be united into a single measurement channel. It was found that the provision of several openings and consequently a separation of the bypass inlet or outlet into multiple separated channels reduces turbulences in the fluid entering the bypass. In a further embodiment, multiple guides are provided and one of which guides is arranged between each two neighbouring openings. It may be preferred that every opening is arranged between two guides such that also the outer openings are flanked by two guides each. Such arrangement of guides causes the flow in the main path to show less turbulences at the location the bypass branches off compared to a main path without such guides. A more laminar flow at such location in turn results in a more laminar flow in the bypass.

Preferably, in case of multiple guides such guides are arranged in parallel to each other and are aligned in flow direction.

Any such guide may be embodied as a guide protruding from an inner wall of the main path.

All these measures may result in a more laminar flow in the bypass which in turn improves a signal to noise ratio in the measurement of the flow in the bypass.

Other advantageous embodiments are listed in the dependent claims as well as in the description below.

### Brief Description of the Drawings

The embodiments defined above and further embodiments, features and advantages of the present invention can be derived from examples of embodiments of the invention to be described hereinafter in connection with the following drawings:
FIG. 1 shows a schematic diagram of a flow sensor arrangement according to an embodiment of the present invention,
FIG. 2 shows a view A on an interior wall of the main channel of the flow sensor arrangement of FIG. 1,
FIG. 3 shows a perspective view on a flow sensor arrangement according to an embodiment of the present invention,
FIG. 4 shows a view on a front end of the flow sensor arrangement according to FIG. 3,
FIG. 5 shows another perspective view on a flow sensor arrangement according to an embodiment of the present invention,
FIG. 6 shows a top view on the flow sensor arrangement of FIG. 5,
FIG. 7 shows a perspective view on a flow sensor arrangement according to an embodiment (currently not claimed), and
FIG. 8 shows a view on a front end of the flow sensor arrangement according to FIG. 7.

### Modes for Carrying Out the Invention

In the figures same or similar elements are referred to by the same reference signs across all figures.

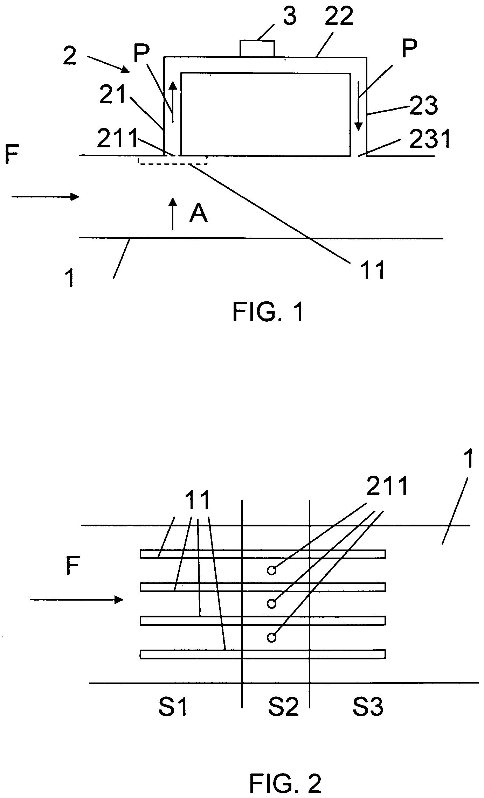

FIG. 1 shows a schematic diagram of a flow sensor arrangement according to an embodiment of the present invention.

A fluid - such as a liquid or a gas - is flowing in a main path 1 of a duct system in flow direction denoted by arrow F. A bypass 2 bypasses the main path 1. A portion P of the fluid F is branched off into bypass 2 through opening 211 in a side wall of the main path 1. The portion P of fluid F returns into the main path 1 through an opening 231 at a downstream location of the main path 1. The bypass 2 comprises an inlet 21, a measurement section 22, and an outlet 23. The inlet 21 and the outlet 23 each comprise channels orthogonal to the main path 1 while the measurement section 22 is aligned in parallel to the main path 1. However, other orientations of the bypass sections may be envisaged. In the measurement section 22, a flow sensor 3 is arranged for measuring the flow of the fluid portion P in the bypass 2. The flow sensor 3 is arranged such that its sensitive element is sufficiently exposed to the fluid portion P in the bypass 2 for sensing the flow of such fluid portion P.

Further, a guide 11 is indicated in FIG. 1 in dashed lines which shall illustrate that the guide 11 is laterally offset - into or out of the plane of projection - with respect to the opening 211. The guide 11 extends in flow direction F and passes by opening 211. The guide 11 is attached to an inner wall of the main path 1 and reduces turbulences at the branch into the bypass 2. As a result, the portion P of fluid F diverted into the bypass 2 may exhibit less turbulence and may be of a more laminar characteristic.

Arrow A in FIG. 1 indicates a view on the inner wall of the main channel 1 where the bypass 2 branches off. Such view A is illustrated in FIG. 2. The main channel 1 comprises three sections S1, S2 and S3 in flow direction F subsequent to each other. There are four guides 11 provided and arranged at the inner wall of the main path 1. Each guide 11 has a small lateral extension, also denoted as width and a comparatively long longitudinal extension along the axis of the main path. Preferably, a height of each guide 11 - and in case the guide 11 has a variable height a maximum height - is equal to or more than a diameter of the opening 211, and preferably less than 50 per cent of the diameter of the main path 1. The guides 11 are arranged in parallel to each other in flow direction F. Providing multiple small openings 211 may be preferred instead of one single large opening 211 since it was found that the larger a cross section area of an opening is the more turbulence is induced into the fluid. On the other hand, a certain cross section area is required for supplying sufficient fluid to the flow sensor 3 in the bypass 2. Hence, a single large opening may be replaced by multiple openings 211 each with a small cross section area resulting in a total cross section area of sufficient magnitude.

In section S2, multiple openings 211 are arranged which together build the entrance into the bypass 2. Each opening 211 is followed by a separate channel, which channels are aligned in parallel to each other and form the inlet 21 of the bypass 2. Each opening 211 is separated from its neighbouring opening/s 211 by a guide 11. Each of the outer openings 211 is flanked by two guides 11, too. A guide 11 arranged at each side of an opening 211 improves smoothing the flow of the fluid in the area the bypass 2 branches off due to friction forces introduced by the guides 11.

Each opening 211 may have a diameter smaller than a tenth of a diameter of the main path 1. This results in small openings 211 contributing to a more laminar flow in the bypass 2. As such, the present embodiment provides an effective arrangement for reducing turbulences in the flow in the bypass 2 thereby improving measurement results in the bypass 2.

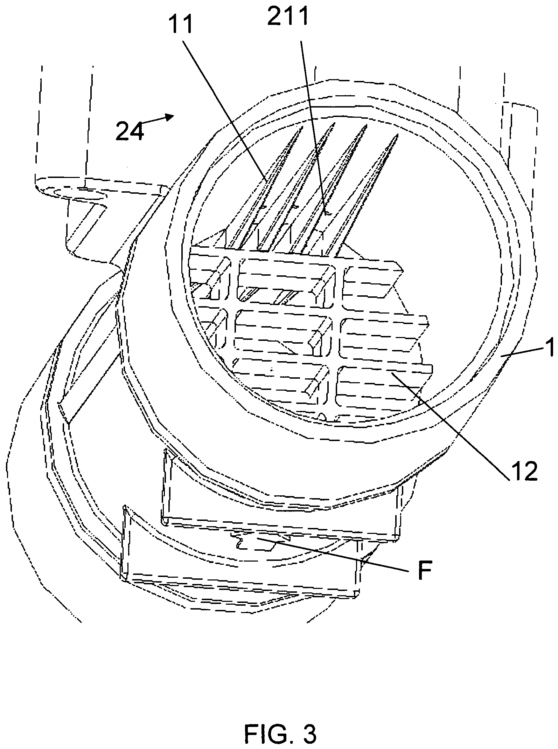

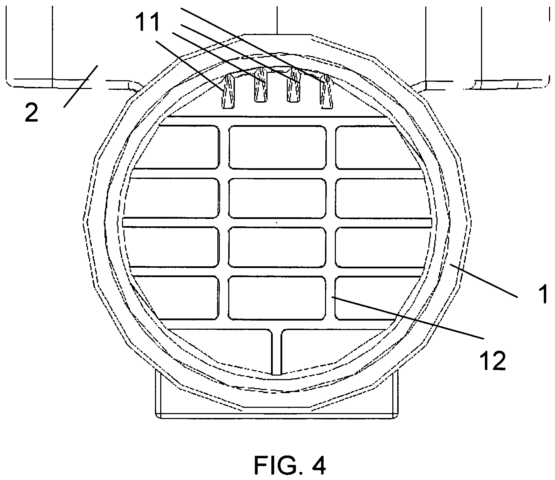

FIG. 3 shows a perspective view on a flow sensor arrangement according to an embodiment of the present invention. FIG. 4 shows a view on a front end of the flow sensor arrangement according to FIG. 3.

A main path 1 of the flow sensor arrangement is formed by a tube, for example, made out of plastics. FIG. 3 illustrates a view into such main channel 1. At both sides of the main channel 1 pipes may be attached for supplying and/or removing the fluid. In the present example, it is assumed that the fluid flows into a direction indicated by arrow F.

In the interior of the present main path 1 a flow resistance 12 in form of a grid is arranged. The flow resistance 12 creates a pressure drop in a region where the bypass 2 branches off by means of the three openings 211 arranged in the inner wall of the main path 1. As a result, a portion of the fluid is caused to enter the inlet 21 of the bypass 2. In the present example, the openings 211 are arranged prior to the flow resistance 12 in flow direction F. Four guides 11 are provided with each opening 211 being arranged between two of the guides 11. As shown in FIG. 3, the flow resistance 12 does not interfere with the guides 11, i.e. the flow resistance 12 and the guides 11 do not overlap in radial direction.

Each of the guides 11 has a variable height. While in the first section S1 not visible in FIG. 3 the height 11 of each guide is rising, a maximum height is reached shortly after the occurrence of the openings 211 in flow direction F, for example, at a longitudinal position where the flow resistance 12 is arranged. With reference to FIG. 2, the first section S1 includes a first portion of the guides 11, and in this particular instance, this portion may be a rising portion. The second section S2 is defined by including the openings 211. While at the longitudinal position of the openings 211 the guides 11 are still rising, a maximum height of the guides 11 is reached soon after in section S2 while in section S3 the height of the guides 11 is falling again. It was found, that when at least portions of the guides 11 are arranged ahead of the openings 211, the fluid may already be smoothed when reaching the openings 211. In addition, guides 11 with rising and falling portions are preferred for reducing turbulences.

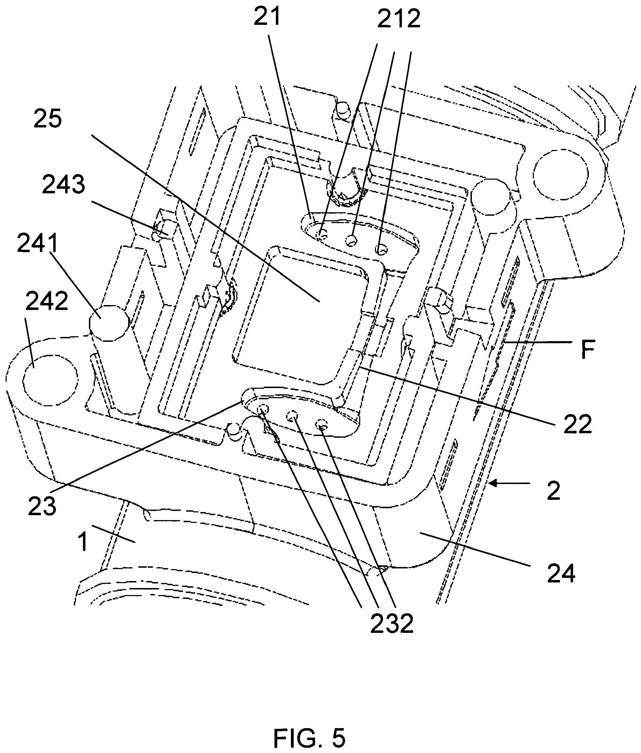

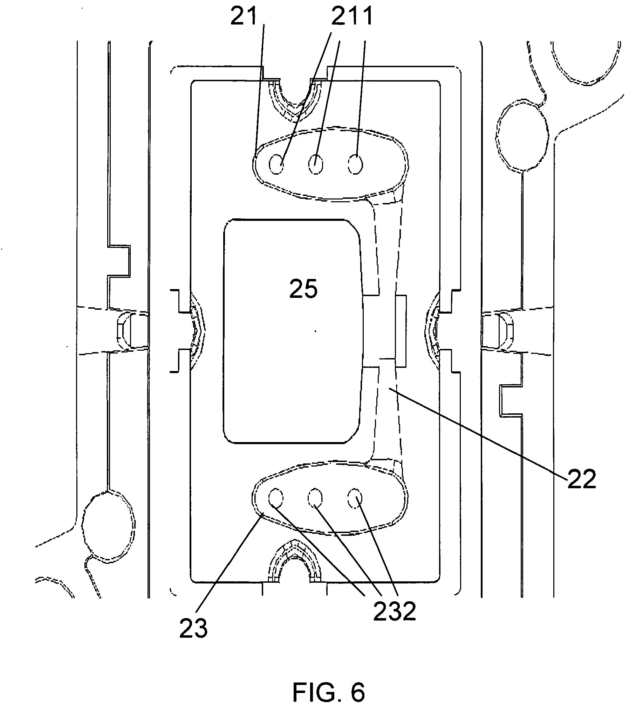

In the Figures 3 and 4 a housing 24 of the bypass 2 is indicated. FIG. 5 illustrates a perspective view into such housing 24 in an opened state while FIG. 6 illustrates the housing in a top view.

In the present example, the main path 1 and the housing 24 of the bypass 2 are made in a single piece form plastics, for example, by means of injection moulding. The housing 24 of the bypass 2 comprises a frame and means 242 for attaching the entire flow sensor arrangement to a support. Other fixing means includes snap fits 243 and notches 241 for having a cover (not shown) attached to the housing 24. Inlet channels 212 of the inlet 21 vertically pass through the housing 24 and terminate in a recess where fluid portions supplied by all three inlet channels 212 reunite before being transported through a measurement channel 22. The measurement channel 22 first narrows and then widens again in flow direction wherein at the narrowest location a flow sensor will be arranged for measuring the flow in the measuring channel 22. A recess 25 for accepting such flow sensor is shown in Figures 5 and 6. The measurement channel 22 terminates in a recess of an outlet 23 of the bypass 2 where the fluid splits into three channels 232 of the outlet 23. The three separate outlet channels 232 are aligned in parallel to each other orthogonal with respect to the main path 1.

It is preferred, that the inlet openings 211 are arranged on a perimeter of the main path 1 at a common longitudinal position in flow direction F. However, in a different embodiment the openings 211 may be longitudinally offset with respect to each other.

According to the embodiments as illustrated in the various Figures, the main path 1 may have a cross section of conic geometry and in particular of circular geometry such that the main path 1 takes the shape of a pipe with a circular cross section. In such embodiment, it is preferred that in case more than one opening 211 is provided such openings 211 are arranged on the perimeter of the main path 1 within an angle of less than 45° degrees with respect to a centre line of the main path 1. Such layout may be owed to the construction of the bypass 2 which may extend from the main path 1 into one single radial direction only. Additionally, such layout may support a more uniform flow condition into the inlet 21 of the bypass 2.

In another embodiment, the main path 1 may have a polygonal cross section such as a rectangular cross section. Then, it is preferred that the openings 211 are arranged in a single side wall of the main path 1.

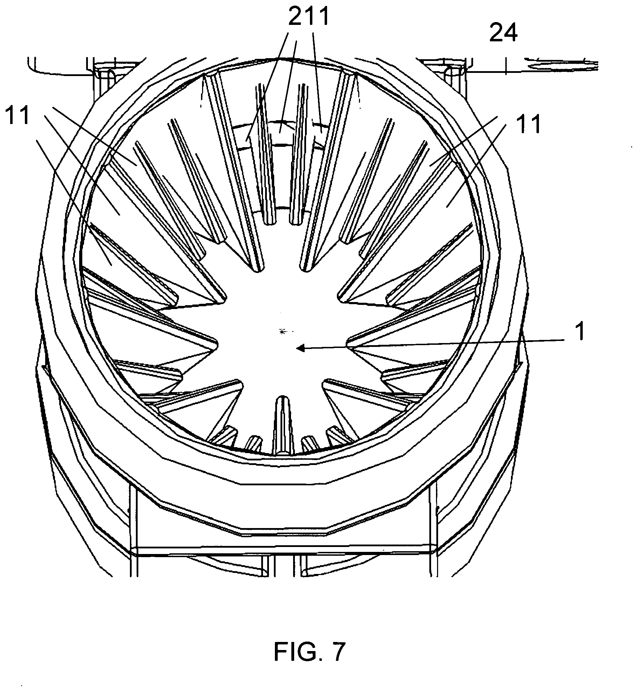

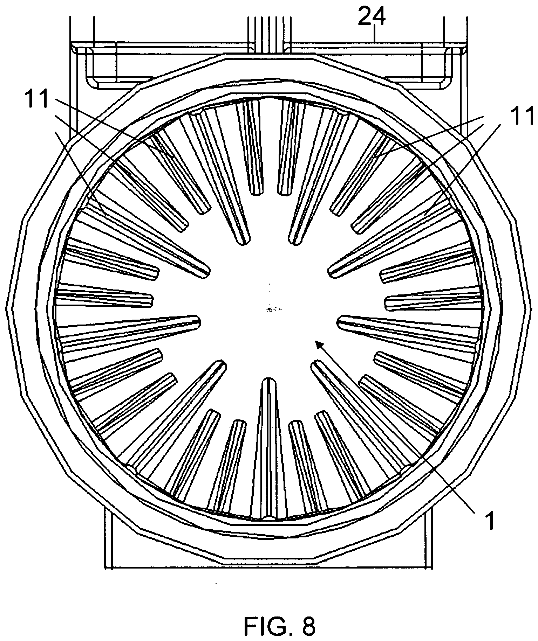

FIG. 7 shows a perspective view on a flow sensor arrangement according to another embodiment (currently not claimed). FIG. 8 shows a view on a front end of the flow sensor arrangement according to FIG. 7.

Again, a main path 1 of the flow sensor arrangement may formed by a tube, for example, made out of plastics, and show a circular cross section defining the main path 1. FIG. 7 illustrates a view into such main channel 1.

In contrast to the embodiment of Figures 3 and 4, no flow resistance separate from the guides 11 is provided. Instead, the multiple guides 11 simultaneously serve as flow resistance for creating a pressure drop in the fluid in a region where the bypass branches off by means of openings 211 arranged in the inner wall of the main path 1. As a result, a portion of the fluid is caused to enter the inlet 21 of the bypass.

In the present example, twenty-seven guides 11 are provided and protrude from the inner wall defining the main path, i.e. in the present example the same wall the openings 211 are arranged in. However, there may be a different number of guides provided. For example, each quadrant may comprise at least one guide, or, in another embodiment, may comprise at least two guides.

In the present embodiment, guides 11 of different maximum height are provided. While nine of the guides 11 show a substantial height within a range of, for example, 40% and 50% of the diameter of the main path 1, between each two of such guides 11 there are provided two more guides 11 with a smaller height, for example, in the range of 10% and 25% of the diameter of the main path 1. Again, each opening 211 is arranged between two of the guides 11. Such arrangement of guides 11 with different maximum heights increases the flow resistance in the center of the main path 1, and specifically around its center, while the flow resistance in the periphery of the main path 1 close to the inner wall is increased. This makes the fluid preferably turn toward the center of the main path 1 and build a smooth flow there while at the same time a more laminar flow in the periphery of the main path is achieved, too, which in turn supports a more laminar flow in the bypass.

The same effect is supported in the present example by each of the guides providing for a varying width. While the height of a guide is defined in a radial direction of the main path and its length is defined by the axis of the main path, the width is defined orthogonal to the height and the length. As especially can be derived from Figure 8, the width of a guide 11 is decreasing towards the center of the main channel 1. This means, that the width of each guide 1 at the bottom, i.e. close to the inner wall exceeds its width at the top of the guide 11, i.e. closer to the center of the main channel. Again, this arrangement supports a flow resistance in the main channel 1 being lower in its center and as such achieves the desired effects.

Each of the guides 11 has a variable height. In the present example, each guide is of triangular shape as can be derived from Figure 7.

While there are shown and described presently preferred embodiments of the invention, it is to be distinctly understood that the invention is not limited thereto but may be otherwise variously embodied and practiced within the scope of the following claims. In particular, the invention is not limited to three openings in combination with four guides. There may be more openings and fewer guides, or fewer openings and more guides. Subject to the application there may be a single opening only in combination with a single guide next to the opening.

## Claims

1. Flow sensor arrangement, comprising
a main path (1) for a fluid to flow through, the main path (1) comprising a first section (S1) followed by a second section (S2) in flow direction (F),
a bypass (2) for bypassing the main path (1), an inlet (21) and an outlet (23) of which bypass (2) each comprise at least one opening (211) arranged in a wall of the main path (1),
a flow sensor (3) for measuring a flow in the bypass (2), and
a guide (11) in the main path (1) extending in flow direction, for smoothing the flow in the main path (1) at the location where the inlet (21) of the bypass (2) or its outlet (23) respectively meets the main path (1), which guide (11) is arranged with respect to the inlet (21) of the bypass (2), or with respect to the outlet (23) of the bypass (2), or which guide (11) is arranged with respect to the inlet (21) of the bypass (2) and another guide (11) is arranged with respect to the outlet (23) of the bypass (2),
wherein the guide (11) protrudes from an inner wall of the main path (1),
**characterized in that** at least a portion of the guide (11) is arranged in the first section (S1) of the main path (1), wherein another portion of the guide is arranged in the second section (S2) of the main path (1), wherein the respective at least one opening (211) is arranged in the second section (S2) of the main path (1),
wherein the guide (11) spans a given length of the main path (1) in flow direction (F) and passes the at least one opening (211) being arranged next to the guide (11),
wherein a height of the guide (11) is at least equal to or more than a diameter of the at least one opening (211), and
wherein an upmost height of the guide (11) is less than 50% of the diameter of the main path (1),
wherein the main path (1) comprises a third section (S3) following the second section (S2) in flow direction (F), in which third section (S3) of the main path (1) a further portion of the guide (11) is arranged, in
wherein a flow resistance (12) in form of a grid is arranged in the third section (S3) of the main path (1),
wherein the grid does not touch any one of the guides (11), and
wherein the flow resistance (12) and the guides (11) do not overlap in radial direction.

2. Flow sensor arrangement according to claim 1,
wherein the inlet (21) or the outlet (23) respectively comprises multiple openings (211) separated from each other.

3. Flow sensor arrangement according to claim 2,
wherein the openings (211) are arranged on a perimeter of the main path (1) at the same longitudinal position in flow direction (F).

4. Flow sensor arrangement according to claim 3,
wherein each opening (211) is associated with a separate channel of the inlet (21) or the outlet (23) respectively.

5. Flow sensor arrangement according to any one of the preceding claims,
comprising multiple guides (11) in the main path (1) extending in flow direction (F).

6. Flow sensor arrangement according to claim 2 in combination with claim 5,
wherein between each two neighbouring openings (211) one of the guides (11) is arranged.

7. Flow sensor arrangement according to claim 5,
wherein each opening (211) is arranged between two of the guides (11).

8. Flow sensor arrangement according to any one of the preceding claims,
wherein an upmost height of the guide (11) is between a diameter of the opening (211) and 50% of a diameter of the main path (1).

9. Flow sensor arrangement according to claim 5,
wherein at least one of the guides (11) is arranged in each quadrant of a circular cross section of the main path (1).

10. Flow sensor arrangement according to claim 5,
wherein at least two of the guides (11) have a different upmost height.

11. Flow sensor arrangement according to any one of the preceding claims,
wherein the guide (11) has a varying height.

12. Flow sensor arrangement according to claim 1,
wherein a width of the guide (11) is smaller at a top of the guide (11) than at a bottom of the guide (11) close to the inner wall.

13. Flow sensor arrangement according to claim 2,
wherein the inlet channels or the outlet (23) channels respectively unite into a single measurement channel (22) of the bypass (2) at which measurement channel (22) the flow sensor (3) is arranged.

## Patentansprüche

1. Strömungssensoranordnung, umfassend
einen Hauptpfad (1) für die Strömung eines Fluids, wobei der Hauptpfad (1) einen ersten Abschnitt (S1), gefolgt von einem zweiten Abschnitt (S2) in der Strömungsrichtung (F) umfasst,
einen Bypass (2) zur Umgehung des Hauptpfades (1), einen Einlass (21) und einen Auslass (23) dieses Bypasses (2), die jeweils mindestens eine in einer Wand des Hauptpfades (1) angeordnete Öffnung (211) aufweisen,
einen Durchflusssensor (3) zur Messung eines Durchflusses im Bypass (2) und
eine Führung (11) im Hauptpfad (1), die sich in Strömungsrichtung erstreckt, zur Glättung der Strömung im Hauptpfad (1) an der Stelle, an der der Einlass (21) des Bypasses (2) oder sein Auslass (23) auf den Hauptpfad (1) trifft, wobei die Führung (11) bezogen auf den Einlass (21) des Bypasses (2) oder bezogen auf den Auslass (23) des Bypasses (2) angeordnet ist, oder wobei die Führung (11) bezogen auf den Einlass (21) des Bypasses (2) und eine weitere Führung (11) bezogen auf den Auslass (23) des Bypasses (2) angeordnet ist,
wobei die Führung (11) aus einer Innenwand des Hauptpfades (1) herausragt,
**dadurch gekennzeichnet, dass** mindestens ein Teil der Führung (11) im ersten Abschnitt (S1) des Hauptpfades (1) angeordnet ist, ein anderer Teil der Führung im zweiten Abschnitt (S2) des Hauptpfades (1) angeordnet ist, wobei die jeweils mindestens eine Öffnung (211) im zweiten Abschnitt (S2) des Hauptpfades (1) angeordnet ist,
wobei die Führung (11) eine gegebene Länge des Hauptpfades (1) in der Strömungsrichtung (F) abdeckt und durch die mindestens eine neben der Führung (11) angeordnete Öffnung (211) verläuft,
wobei eine Höhe der Führung (11) mindestens gleich oder grösser als ein Durchmesser der mindestens einen Öffnung (211) ist, und
wobei eine maximale Höhe der Führung (11) weniger als 50 % des Durchmessers des Hauptpfades (1) beträgt,
wobei der Hauptpfad (1) einen dritten Abschnitt (S3) umfasst, der dem zweiten Abschnitt (S2) in Strömungsrichtung (F) folgt, wobei ein weiteres Führungsteil (11) im dritten Abschnitt (S3) des Hauptpfades (1) angeordnet ist,
wobei ein Strömungswiderstand (12) in der Form eines Gitters im dritten Abschnitt (S3) des Hauptpfades (1) angeordnet ist,
wobei das Gitter keine der Führungen berührt (11), und
wobei sich der Strömungswiderstand (12) und die Führungen (11) in radialer Richtung nicht überlappen.

2. Strömungssensoranordnung nach Anspruch 1,
wobei der Einlass (21) bzw. der Auslass (23) mehrere voneinander getrennte Öffnungen (211) aufweist.

3. Strömungssensoranordnung nach Anspruch 2,
wobei die Öffnungen (211) auf einem Umfang des Hauptpfades (1) an der gleichen Längsposition in der Strömungsrichtung (F) angeordnet sind.

4. Strömungssensoranordnung nach Anspruch 3,
wobei jede Öffnung (211) mit einem separaten Kanal entweder des Einlasses (21) oder des Auslasses (23) verbunden ist.

5. Strömungssensoranordnung nach einem der vorangehenden Ansprüche,
umfassend eine Vielzahl von Führungen (11) im Hauptpfad (1), die sich in der Strömungsrichtung (F) erstrecken.

6. Strömungssensoranordnung nach Anspruch 2 in Kombination mit Anspruch 5,
wobei jeweils eine der Führungen (11) zwischen zwei benachbarten Öffnungen (211) angeordnet ist.

7. Durchflusssensoranordnung nach Anspruch 5,
wobei jede Öffnung (211) zwischen zwei der Führungen (11) angeordnet ist.

8. Durchflusssensoranordnung nach einem der vorangehenden Ansprüche,
wobei die maximale Höhe der Führung (11) zwischen einem Durchmesser der Öffnung (211) und 50 % eines Durchmessers des Hauptpfades (1) liegt.

9. Durchflusssensoranordnung nach Anspruch 5,
wobei mindestens eine der Führungen (11) in jedem Quadranten eines kreisförmigen Querschnitts des Hauptpfades (1) angeordnet ist.

10. Durchflusssensoranordnung nach Anspruch 5,
wobei mindestens zwei der Führungen (11) eine unterschiedliche maximale Höhe haben.

11. Durchflusssensoranordnung nach einem der vorangehenden Ansprüche,
wobei die Führung (11) eine variable Höhe hat.

12. Durchflusssensoranordnung nach Anspruch 1,
wobei eine Breite der Führung (11) oben an der Führung (11) kleiner ist als unten an der Führung (11) in der Nähe der Innenwand.

13. Durchflusssensoranordnung nach Anspruch 2,
wobei die Kanäle des Einlasses oder die Kanäle des Auslasses (23) in einen einzigen Messkanal (22) des Bypasses (2) übergehen, auf dem der Strömungssensor (3) angeordnet ist.

## Revendications

1. Agencement de capteur de débit, comprenant
Un chemin principal (1) pour l'écoulement d'un fluide, le chemin principal (1) comprenant une première section (S1) suivie d'une deuxième section (S2) dans la direction de l'écoulement (F),
une dérivation (2) pour contourner le chemin principal (1), une entrée (21) et une sortie (23) de cette dérivation (2) comprenant chacune au moins une ouverture (211) disposée dans une paroi du chemin principal (1),
un capteur de débit (3) pour mesurer un écoulement dans la dérivation (2), et
un guide (11) dans le chemin principal (1), qui s'étend dans la direction de l'écoulement, pour lisser l'écoulement dans le chemin principal (1) à l'endroit où l'entrée (21) de la dérivation (2) ou bien sa sortie (23) rencontre le chemin principal (1), lequel guide (11) est disposé avec un regard sur l'entrée (21) de la dérivation (2), ou avec un regard sur la sortie (23) de la dérivation (2), ou lequel guide (11) est disposé avec un regard sur l'entrée (21) de la dérivation (2) et un autre guide (11) est disposé avec un regard sur la sortie (23) de la dérivation (2),
dans lequel le guide (11) fait saille d'une paroi intérieure du chemin principal (1),
**caractérisé en ce qu'**au moins une partie du guide (11) est disposée dans la première section (S1) du chemin principal (1), une autre partie du guide est disposée dans la deuxième section (S2) du chemin principal (1), la au moins une ouverture (211) respective est disposée dans la deuxième section (S2) du chemin principal (1),
dans lequel le guide (11) couvre une longueur donnée du chemin principal (1) en direction de l'écoulement (F) et passe par la au moins une ouverture (211) disposée à côté du guide (11),
dans lequel une hauteur du guide (11) est au moins égale ou supérieure à un diamètre de la au moins une ouverture (211), et
dans lequel une hauteur maximale du guide (11) est inférieure à 50% du diamètre du chemin principal (1),
dans lequel le chemin principal (1) comprend une troisième section (S3) qui suit la deuxième section (S2) dans la direction de l'écoulement (F), une autre partie du guide (11) est disposée dans la troisième section (S3) du chemin principal (1),
dans lequel une résistance d'écoulement (12) en forme de grille est arrangée dans la troisième section (S3) du chemin principal (1),
dans lequel la grille ne touche aucun des guides (11), et
dans lequel la résistance à l'écoulement (12) et les guides (11) ne se chevauchent pas dans le sens radial.

2. Agencement de capteur de débit selon la revendication 1,
où l'entrée (21) ou la sortie (23) respectivement comprend de multiples ouvertures (211) séparées les unes des autres.

3. Agencement de capteur de débit selon la revendication 2,
où les ouvertures (211) sont disposées sur un périmètre du chemin principal (1) à la même position longitudinale dans la direction de l'écoulement (F).

4. Agencement de capteur de débit selon la revendication 3,
où chaque ouverture (211) est associée à un canal séparé de l'entrée (21) ou bien de la sortie (23).

5. Agencement de capteur de débit selon l'une quelconque des revendications précédentes,
comprenant plusieurs guides (11) dans le chemin principal (1) s'étendant dans la direction de l'écoulement (F).

6. Agencement de capteur de débit selon la revendication 2 en combinaison avec la revendication 5,
où entre chaque deux ouvertures voisines (211) est disposé l'un des guides (11).

7. Agencement de capteur de débit selon la revendication 5,
où chaque ouverture (211) est disposée entre deux des guides (11).

8. Agencement de capteur de débit selon l'une quelconque des revendications précédentes,
où la hauteur maximale du guide (11) se situe entre un diamètre de l'ouverture (211) et 50 % d'un diamètre du chemin principal (1).

9. Agencement de capteur de débit selon la revendication 5,
où au moins un des guides (11) est disposé dans chaque quadrant d'une coupe transversale circulaire du chemin principal (1).

10. Agencement de capteur de débit selon la revendication 5,
où au moins deux des guides (11) ont une hauteur supérieure différente.

11. Agencement de capteur de débit selon l'une quelconque des revendications précédentes,
où le guide (11) a une hauteur variable.

12. Agencement de capteur de débit selon la revendication 1,
où une largeur du guide (11) est plus petite en haut du guide (11) qu'en bas du guide (11) près de la paroi intérieure.

13. Agencement de capteur de débit selon la revendication 2,
où les canaux d'entrée ou bien les canaux de sortie (23) s'unissent en un seul canal de mesure (22) de la dérivation (2), canal de mesure (22) sur lequel est disposé le capteur de débit (3).
